# EUROPEAN PATENT SPECIFICATION

(11) **EP 0 581 834 B1**
(45) Date of publication and mention of the grant of the patent: **09.08.1995**
(21) Application number: 92909383.9
(22) Date of filing: 13.04.1992
(51) Int. Cl.: B01D 46/24, B01D 50/00, B01D 53/94, B01D 53/60, B01D 53/62, B01J 23/84, F01N 3/10, F01N 3/28

(54) **EXHAUST-GAS FILTER**
ABGASFILTER
FILTRE POUR GAS DE COMBUSTION

(30) Priority: 23.04.1991 US 689976
(43) Date of publication of application: 09.02.1994
(73) Proprietor: DONALDSON COMPANY, INC., Minneapolis, MN 55440 (US)
(72) Inventor: WRIGHT, Mervin, E., Apple Valley, MN 55124 (US); HOEPPNER, Willard, G., Minneapolis, MN 55409 (US); JAHN, Darrell, D., Shakopee, MN 55379 (US); CLOCK, Nancy, A., Minneapolis, MN 55408 (US); STESNIAK, Edgar, J., St. Paul, MN 55128 (US)
(74) Representative: Marchitelli, Mauro
(86) International application number: US9202971
(87) International publication number: WO9218226

(56) References cited:
- EP-A- 0 020 766
- EP-A- 0 153 157
- EP-A- 0 384 853
- EP-A- 0 412 345

## Description

### BACKGROUND OF THE INVENTION

### 1. Field of the Invention

The present invention relates to a device for removing harmful particulates and gases from engine exhaust and in particular to a filter and catalyst for removing particulates and gases from diesel exhaust.

More specifically, the invention relates to an apparatus according to the preamble of claim 1. The invention also relates to a method of removing harmful particulates and gases from exaust.

### 2. Description of the Prior Art

Devices used to clean engine exhaust have heretofore been inadequate for eliminating all types of harmful discharges from internal combustion engines. In the workplace, the pollution due to engines operating poses a serious health hazard to workers. Diesel engines in particular emit exhaust which tends to have a strong undesirable odor and which has a large concentration of soot exhausted, especially when operating under high throttle conditions. Unwanted elements such as carbon smoke and unburned fuel occur in greater amounts in diesel emissions. Along with particulates, harmful gases are also emitted in the diesel exhaust. The problem is exaggerated in enclosed spaces, such as warehouses, wherein vehicles such as diesel forklifts are operating.

Filtration with metal or ceramic filters is a common method of eliminating undesirable particulate components of the diesel exhaust. However, filtration alone is not adequate to eliminate all harmful elements of diesel exhaust and catalytic converters are not practical with diesel engines as the diesel exhaust contains too much particulate matter. Gases such as carbon monoxide, sulfur dioxide, and nitrogen dioxide from diesel engines pass through filtration systems. These gases pose a health hazard to workers in enclosed spaces if the concentration is too high. In addition, the strong odors associated with burning diesel fuels due to these and other gases pass through filtration systems.

To reduce the harmful gases from the exhaust, it is necessary to pass the exhaust gases through a catalyst so that the gases are changed to less harmful gases or are broken down while passing through the catalyst materials. A catalyst also provides for reducing odors associated with the gases in the diesel exhaust. To work effectively, the carbon soot and other particulates in the exhaust must be removed prior to passing through the catalyst to prevent contamination of the catalyst due to particulate build up. The catalyst also must be able to perform without causing a pressure build up which may affect engine performance and could damage the engine and exhaust system.

A device which attempts to solve these problems is shown in EP-A-0 384 853.

For reduction of harmful gases from exhaust on engines having low temperature exhaust flow, such as intermittent use diesel engines wherein the accelerator is fully depressed between periods of idling, the catalyst must be able to operate effectively in exhaust flow having relatively low temperatures in the range from ambient to 320°C (600°F) as opposed to constant speed engines which have exhaust temperatures in the range of 425 - 600°C (800 - 1100°F). However, the reactions which take place in the catalyst with exhaust gases are exothermic, so that the catalyst must operate over a wide temperature range as heat will build up in the catalyst. It is also important that the volume of the catalyst remain constant as the temperature varies so that the exhaust gases do not bypass the catalyst material through gaps which are created when the catalyst expands and contracts.

It can be seen then, that a device is needed which reduces harmful particulate matter as well as odors and harmful exhaust gases over a wide temperature range. The present invention addresses these, as well as other problems associated with cleaning engine exhaust.

### SUMMARY OF THE INVENTION

According to the present invention, the above problems are solved by an apparatus as defined in claims 1-3 and by a method as defined in claims 4 and 5. In accordance with the invention, particulates are removed from the exhaust with a filter which is cleanable and which is reusable. Following filtering of the exhaust gases, the gases flow through a catalyst which reacts with harmful gases emitted in the exhaust. The reactions which take place reduce the amount of toxic gases so that the exhaust can then be safely emitted to the atmosphere.

After passing along a length of pipe leading from the engine, and which may pass through a muffler, the gases enter an exhaust cleaning unit. Upon entering the unit, the gases are directed to the interior of a filter cartridge and then flow radially outward through the filter element of the cartridge. The filter cartridge is generally cylindrical so that capping of the ends forces all of the flow from the interior of the cartridge outward. The cartridge is held in place by an end cap and a bolt and nut retaining the end cap. By loosening the end cap, the cartridge may be pulled from the filter unit for cleaning. During handling of the filter cartridge for cleaning, the ends may be capped so that no particulate escapes from the interior of the cartridge where the particulate has been trapped. In addition, with a pleated filter material configuration, additional build-up of soot does not decrease filtering performance and may actually enhance performance. Following cleaning of the filter cartridge, the cartridge may be reused over and over.

Since particulates quickly react with any catalyst or coat the catalyst, exhaust gases must first be filtered before passing through a catalyst. Therefore, according to the present invention, the gases pass through the catalyst after flowing through the filter cartridge. Baffles direct the filtered gases in an even pattern through the catalyst material. The gases then react with the catalyst material so that harmful gases such as nitrogen dioxide, sulphur dioxide and carbon monoxide are reduced. This also reduces the odor associated with diesel engines.

The reaction between the catalyst and exhaust gases is exothermic, so that expansion and contraction of the catalyst material would lead to gaps in the material, thereby providing for bypassing of the catalyst by the exhaust gases. It is therefore important that the catalyst material does not expand or contract under the operating temperature range encountered. It is also desirable to have the retaining screens which hold the material be floating so that variations in the housing for the catalyst does not lead to buckling due to differences in expansion and contraction.

The catalyst is preferably mounted in a module which may be attached to the exhaust cleaning unit so that flow is directed outward from the filter cartridge through the catalyst unit and then expelled to the atmosphere. The catalyst module is also either clamped or bolted to the housing so that a module may be removed and regenerated for reuse or replaced with a new module. This provides for cleaning and reuse or replacement of both the filtering component and the catalyst component.

These and various other advantages and features of novelty which characterize the invention are pointed out with particularrty in the claims annexed hereto and forming a part hereof. However, for a better understanding of the invention, its advantages, and the objects obtained by its use, reference should be made to the drawings which form a further part hereof, and to the accompanying descriptive matter, in which there is illustrated and described a preferred embodiment of the invention.

### BRIEF DESCRIPTION OF THE DRAWINGS

In the drawings, wherein like reference letters and numerals indicate corresponding elements throughout the several views:
Figure 1 shows a rear perspective view of a fork lift with a filtering catalyst unit mounted thereon according to the principles of the present invention;
Figure 2 shows a side sectional view of the filter and catalyst unit shown in Figure 1;
Figure 3 shows an end sectional view taken along line 3-3 of Figure 2; and
Figure 4 shows an end sectional view taken along line 4-4 of Figure 2.

### DETAILED DESCRIPTION OF THE PREFERRED EMBODIMENT(S)

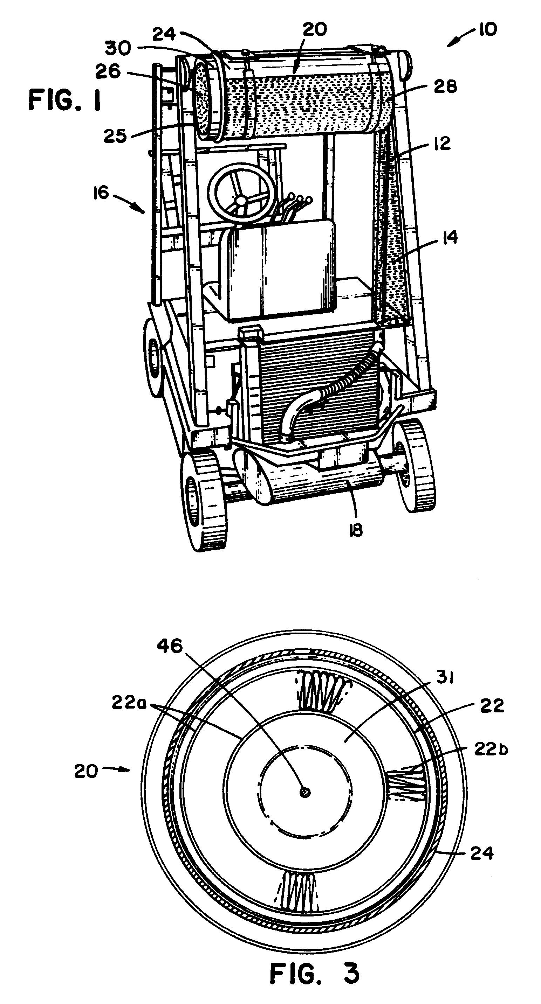

Referring now to the drawings, Figure 1 shows a combustion filtering apparatus, generally designated 10, attached to and drawing exhaust off a muffler 18 from an engine (not shown). The combustion filtering apparatus 10 has an agglomerating pipe 12 surrounded by protective heat guard 14. The combustion filtering apparatus 10 is shown mounted on a diesel fork lift 16, however, it can be appreciated, that the combustion filtering apparatus 10 could be used with other hydro-carbon fueled combustion engines as well.

The agglomerating pipe 12 leads to an exhaust cleaning assembly, generally designated 20. Exhaust flows into a filter housing 24 attached to an upper portion of the frame of the fork lift 16. In the preferred embodiment, the cleaning assembly 20 has a heat guard 28 to protect workers from burns.

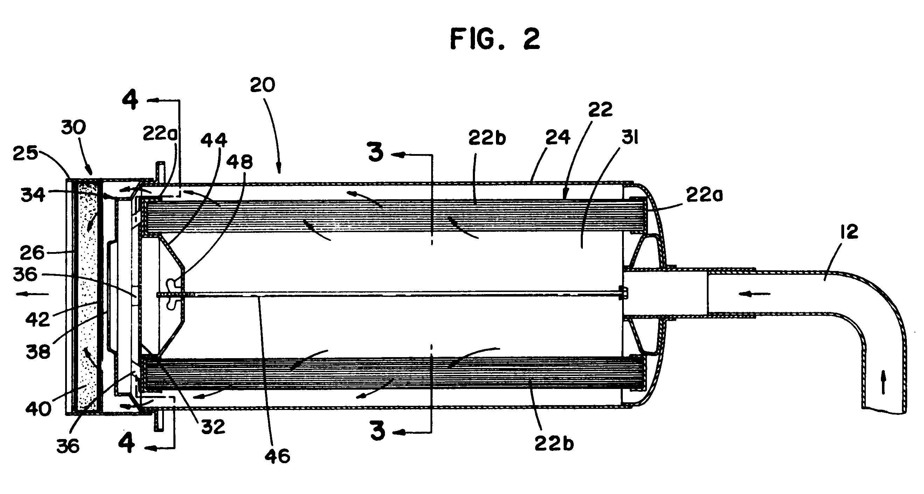

As shown in Figure 2, the exhaust cleaning assembly 20 includes the filter housing 24 along with a catalyst module 30 mounted on an end of the filter housing 24 opposite the agglomerating pipe 12. The filter housing 24 receives a cylindrical filter cartridge 22. In the preferred embodiment, the filter cartridge 22 is cylindrical with an annular configuration. Ends of the cylinder are covered with end rings 22a connecting a pleated fiber filter element 22b. The filter cartridge is retained in the filter housing 24 by an end cap 44 covering the end ring 22a furthest from the agglomerating pipe 12. The end cap 44 is retained by a wing nut 48 mounting on a bolt 46 extending through the center of the filter cartridge 22.

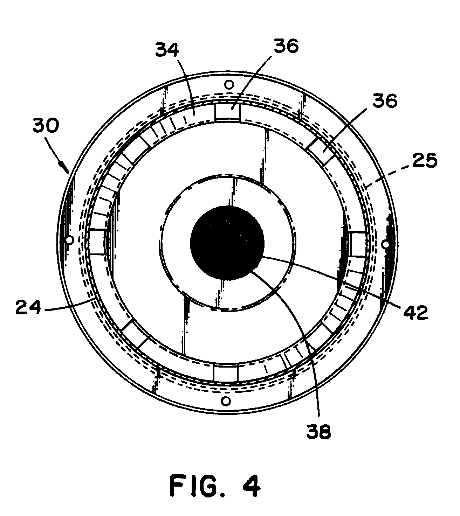

As shown in Figure 3, the filter cartridge has a chamber 31 interior of the filter element 22b around the retention bolt 46. It can be appreciated that upon removal of the catalyst module 30, the filter cartridge 22 can be easily slid out of the filter housing 24 by loosening the wing nut 48 and removing the end cap 44 so that the filter cartridge 22 slides out of the filter housing 24. In this manner and with removal of the catalyst module 30, the filter cartridge 22 may be easily removed and then cleaned and reused or replaced.

The catalyst module 30 attaches over an end of the filter housing 24 with bolts or clamps. The catalyst module 30 contains catalyst material 40, typically in the form of pellets, which is retained by screens 26 and 42. As shown in Figures 2 and 4, the flow is directed through the catalyst module 30 through peripheral ports 36 and a center port 38 by baffles 32 and 34.

In operation, exhaust flows from the agglomerating pipe 12 into a first end of the filter housing 24, as shown in Figure 2. The filter cartridge 22 mounts in the filter housing 24 so that the end rings 22a at the inlet end of the filter housing 24 engage the end of the filter housing 24 so that all flow is directed through the end ring 22a into the chamber 31 interior of the filter cartridge 22. The end cap 44 covers the opening of the end ring 22a proximate the catalyst module 30. Exhaust is therefore forced to flow into the chamber 31 and flow radially outward through the filter element 22b. The carbon particles and soot from the diesel exhaust are trapped on the interior of the filter element 22b. Therefore, should cleaning be required, the filter cartridge 22 may be removed and, by covering the end rings 22a, the filter cartridge 22 may be handled without the soot or carbon particles escaping.

After passing outward through the filter element 22b, the filtered exhaust gas flows between the end cap 22a and filter housing 24 proximate the catalyst module 30. Flow is directed through the peripheral ports 36 by the baffles 32. A portion of the flow remains near the filter housing 24 and flows through the inner screen 42 while a portion of the flow is directed by the baffles 34 through the center port 38 and then through the inner screen 42. The exhaust gas then passes through the catalyst material 40 and through the outer screen 26 to the atmosphere. In the preferred embodiment, screens 42 and 26 are floating screens which are retained but not attached to provide for some expansion and contraction due to temperature variations without the screens buckling.

In the preferred embodiment, the catalyst 40 is a manganese dioxide (MnO₂) and copper oxide (CuO) compound. The manganese dioxide and copper oxide catalyst does not contract or expand in the temperature ranges ranging from ambient to maximum operating temperature. It is important that the catalyst 40 does not expand or contract so that no gaps form in the flow path. Should gaps develop along the flow path, the exhaust would pass through the gaps without passing through the catalyst, thereby bypassing the step of neutralizing harmful gases. The manganese dioxide and copper oxide catalyst reacts with sulphur dioxide, nitrogen dioxide and carbon monoxide to reduce those and other gases. The catalyst's reaction with the exhaust gases also reduces the odor associated with diesel exhaust. The reactions that take place are exothermic, so that it is critical that the catalyst 40 does not expand and remains effective at increased temperatures as the catalyst may reach temperatures on the order of 200 - 500°C (400 - 900°F). It is also important that the catalyst operate at ambient conditions as there will be exhaust passing through the catalyst 40 before a temperature increase occurs.

It can be appreciated that it is essential for the exhaust to be filtered to remove the carbon particulates that are associated with diesel exhaust. The diesel exhaust particulates would otherwise pass through the catalyst 40 and nullify the effects of the reactions with the harmful gases.

In the preferred embodiment, the entire catalyst module 30 is in a housing 25 which is removable and replaceable. Therefore, with treatment, the catalyst 40 may be regenerated and reused. The entire module 30 is replaceable rather than the only catalyst material to prevent handling of the catalyst material and any possible spillage. Although safe when reacting with exhaust gases, the catalyst could be hazardous if incorrectly handled as it may react with other substances.

It can be appreciated that according to the present invention, the exhaust gas is first filtered to remove particulates and then passes through a catalyst to reduce remaining harmful gases. These steps address the two problems causing the greatest hazard to health, both the carbon particulate and the harmful gases, which are emitted from a diesel engine. In addition, working conditions are improved as the diesel odor associated with the gases is reduced as well. It can also be appreciated that the present invention provides for reuse of the cleaning elements. The catalyst module is removed without having to handle the catalyst material 40 as the catalyst material 40 is retained by the screens 26 and 42 at all times including when the module 30 is removed so that the catalyst material 40 is closed off from contact with workers. The catalyst 40 may then be regenerated and the module 30 may be reused or replaced. In addition, the filter cartridge 22 may also be either cleaned and used again or replaced. The design of the filter cartridge 22 provides for handling of the cartridge 22 with the soot retained on the interior of the cartridge by covering the end rings 22a during handling. In this manner, the soot does not escape and does not pose a hazard to workers. The resulting combustion filtering apparatus 10 provides an efficient reusable means of treating exhaust to reduce pollutants.

## Claims

1. An apparatus (20) for reducing undesirable gases and particles from exhaust gases, comprising:
a removable filter cartridge (22) in a filter housing (24) having an inlet for directing exhaust gases to an interior of the filter cartridge for filtering out particulate material of said exhaust gases;
a removable catalyst module (30) mounted proximate to the outlet of the filter housing retaining a constant volume catalyst compound (40) suitable to react with undesirable gases in the filtered exhaust for reducing the amount of undesirable gases, wherein the catalyst module (30) is removable independently of the filter cartridge (22);
characterized in that the filter cartridge (22) includes a cylindrical cartridge with a cylindrical filter element (22b) having annular end rings (22a) and an end cap (44) at the end proximate to the catalyst module for directing exhaust gases to flow radially outward through the filter element (22b), and wherein the catalyst module (30) includes baffles (32,34) for directing the filtered exhaust gases evenly through the catalyst compound (40) and floating retaining screens (26,42) for retaining the catalyst compound (40).

2. A device according to claim 1, wherein the catalyst module includes a manganese dioxide and copper oxide catalyst compound (40).

3. A device according to claim 1, wherein the catalyst module (30) is sealed to prevent access to the catalyst matter to prevent tampering with the catalyst compound (40).

4. A method of removing harmful particulates and gases from exhaust gases, comprising the steps of:
passing the exhaust gases through a length of pipe (12);
directing said exhaust gases to flow radially outward through a cylindrical removable and replaceable filter element (22b), thereby trapping the particulates on the filter element (22b);
passing the filtered exhaust gases through baffles (32,34) for directing the flow evenly through an independently removable and replaceable catalyst module (30) having floating screens (26,42) retaining a catalyst compound (40) and separated from the filter element (22b);
venting the filtered and catalyzed gas to atmosphere.

5. A method according to claim 4, wherein the step of passing the filtered exhaust through a catalyst comprises passing the exhaust through a manganese dioxide and copper oxide catalyst.

## Patentansprüche

1. Eine Einrichtung (20) zur Reduzierung unerwünschter Gase und Partikel von Abgasen, die umfaßt:
einen auswechselbaren Filtereinsatz (22) in einem Filtergehäuse (24) mit einem Einlaß zum Leiten von Abgasen zum Inneren des Filtereinsatzes, um Materialpartikel aus den Abgasen herauszufiltern;
ein nahe dem Auslaß des Filtergehäuses befestigtes, auswechselbares Katalysatormodul (30) zum Halten bzw. Speichern einer Katalysatormischung (40) mit konstantem Volumen, die geeignet ist, mit unerwünschten Gasen in dem gefilterten Abgas zur Reduzierung der Menge von unerwünschten Gasen zu reagieren, wobei das Katalysatormodul (30) unabhängig von dem Filtereinsatz (22) auswechselbar ist;
dadurch gekennzeichnet, daß der Filtereinsatz (22) einen zylindrischen Einsatz mit einem zylindrischen Filterelement (22b) enthält, das ringförmige Endringe (22a) und an dem dem Katalysatormodul nahen Ende eine Endkappe (44) aufweist, welche die Abgase leiten, daß diese radial nach außen durch das Filterelement (22b) strömen, und daß das Katalysatormodul (30) Umlenkeinrichtungen (32, 34) enthält, um die gefilterten Abgase gleichmäßig durch die Katalysatormischung (40) und schwimmende Haltescheiben (26, 42), welche die Katalysatormischung (40) halten bzw. speichern, zu leiten.

2. Eine Einrichtung nach Anspruch 1, dadurch gekennzeichnet, daß das Katalysatormodul eine Katalysatormischung (40) aus Mangandioxid und Kupferoxid enthält.

3. Eine Einrichtung nach Anspruch 1, dadurch gekennzeichnet, daß das Katalysatormodul (30) abgedichtet ist, um einen Zugang zur Katalysatorsubstanz und eine Beeinflussung der Katalysatormischung (40) zu verhindern.

4. Ein Verfahren zum Entfernen von schädlichen Partikeln und Gasen aus Abgasen, das die Schritte umfaßt:
Durchströmen der Abgase durch ein Rohrstück (12);
Weiterleiten der Abgase, daß sie radial nach außen durch ein zylindrisches, auswechselbares und austauschbares Filterelement (22b) strömen, und dadurch Abscheiden der Partikel in dem Filterelement (22b);
Durchströmen der gefilterten Abgase durch Umlenkeinrichtungen ( 32,34) zur gleichmäßigen Weiterleitung der Strömung durch ein unabhängig auswechselbares und austauschbares Katalystormodul (30), das schwimmende Scheiben (26, 42) aufweist, welche eine Katalysatormischung (40) halten bwz. speichern, und getrennt von dem Filterelement (22b) ist;
Ablassen des gefilterten und katalysierten Gases an die Umgebung.

5. Ein Verfahren nach Anspruch 4, dadurch gekennzeichnet, daß der Schritt, Durchströmen des gefilterten Abgases durch einen Katalysator, umfaßt, Durchströmen des Abgases durch einen Katalysator aus Mangandioxid und Kupferoxid.

## Revendications

1. Appareil (20) pour réduire les gaz et particules indésirables des gaz de combustion, comprenant :
- une cartouche de filtrage (22) amovible placée dans un logement de filtre (24) comprenant une entrée pour diriger les gaz de combustion vers l'intérieur de la cartouche de filtrage afin d'éliminer la matière particulaire desdits gaz de combustion ;
- un module catalyseur amovible (30), monté à proximité de la sortie du logement de filtre, retenant un volume constant de composition catalytique (40) capable de réagir avec les gaz indésirables des gaz de combustion filtrés pour réduire la quantité de gaz indésirables, ledit module catalyseur (30) pouvant être enlevé indépendamment de la cartouche de filtrage (22) ;
caractérisé en ce que la cartouche de filtrage (22) comprend une cartouche cylindrique avec un élément cylindrique (22b) de filtrage ayant des anneaux circulaires d'extrémité (22a) et un bouchon d'extrémité (44) à l'extrémité proche du module catalyseur pour diriger les gaz de combustion de façon à les évacuer radialement à travers l'élément de filtrage (22b),
et en ce que le module catalytique (30) comprend des chicanes (32, 34) pour diriger les gaz de combustion filtrés uniformément à travers la composition catalytique (40), et des écrans flottants (26, 42) permettant de retenir la composition catalytique (40).

2. Procédé selon la revendication 1, caractérisé en ce que le module catalytique comprend du dioxyde de manganèse et une composition catalytique d'oxyde de cuivre (40).

3. Procédé selon la revendication 1, caractérisé en ce que le module catalytique (30) est scellé pour empêcher l'accès à la matière catalytique, pour empêcher toute manipulation de la composition catalytique (40).

4. Procédé d'extraction de particules et de gaz nocifs des gaz de combustion, comprenant les étapes consistant à :
faire passer les gaz de combustion à travers une longueur de tuyau (12) ;
diriger lesdits gaz de combustion de façon à les évacuer radialement à travers un élément de filtrage (22b) cylindrique amovible et remplaçable, de façon à isoler les particules dans l'élément de filtrage (22b) ;
faire passer les gaz de combustion filtrés à travers des chicanes (32, 34) pour diriger le flux uniformément à travers un module catalytique (30) indépendant, amovible et remplaçable comprenant des écrans flottants (26, 42) retenant une composition catalytique (40) et séparé de l'élément de filtrage (22b) ;
évacuer le gaz filtré et catalysé dans l'atmosphère.

5. Procédé selon la revendication 4, caractérisé en ce que l'étape consistant à passer le gaz de combustion filtré à travers un catalyseur comprend l'étape consistant à le passer à travers du dioxyde de manganèse et un catalyseur d'oxyde de cuivre.
